# EUROPÄISCHE PATENTSCHRIFT

(11) **EP 4 208 003 B1**
(45) Veröffentlichungstag und Bekanntmachung des Hinweises auf die Patenterteilung: **25.10.2023**
(21) Anmeldenummer: 21835988.3
(22) Anmeldetag: 02.12.2021
(51) Int. Cl.: A01C 7/06, A01C 7/10, A01C 21/00, A01C 7/18, A01C 7/04

(54) **VERFAHREN UND VORRICHTUNG ZUM ABSTIMMEN DES BETRIEBS EINER VEREINZELUNGSEINRICHTUNG UND DES BETRIEBS EINER PORTIONIEREINRICHTUNG AUFEINANDER**
METHOD AND DEVICE FOR MATCHING THE OPERATION OF A SINGULATING DEVICE AND THE OPERATION OF A PORTIONING DEVICE
PROCEDE ET DISPOSITIF PERMETTANT D'ADAPTER LE FONCTIONNEMENT D'UN DISPOSITIF DE SINGULATION ET LE FONCTIONNEMENT D'UN DISPOSITIF DE PORTIONNEMENT

(30) Priorität: 17.12.2020 DE 102020133887
(43) Veröffentlichungstag der Anmeldung: 12.07.2023
(73) Patentinhaber: Amazonen-Werke H. Dreyer SE & Co. KG, 49205 Hasbergen (DE)
(72) Erfinder: DREYER, Justus, 49078 Osnabrück (DE); JOHANNABER, Stefan Jan, 49536 Lienen (DE); TECKEMEYER, Stephan, 49504 Lotte (DE); HILBERT, Florenz, 48282 Emsdetten (DE); TRENTMANN, Markus, 49134 Wallenhorst (DE)
(74) Vertreter: Pelster Behrends Patentanwälte PartG mbB
(86) Internationale Anmeldenummer: PCT/EP2021/084071
(87) Internationale Veröffentlichungsnummer: WO 2022/128518

(56) Entgegenhaltungen:
- DE-A1-102019 104 293
- US-A1- 2004 231 575
- US-A1- 2018 014 457
- US-A1- 2018 359 909

## Beschreibung

Die Erfindung betrifft ein Verfahren zum Abstimmen des Betriebs einer Vereinzelungseinrichtung und des Betriebs einer Portioniereinrichtung einer landwirtschaftlichen Ausbringmaschine aufeinander nach dem Oberbegriff des Patentanspruchs 1 und ein Kalibriersystem für eine landwirtschaftliche Ausbringmaschine nach Oberbegriff des Patentanspruchs 10.

Aus der Druckschrift US 2004/231575 A1 ist ein Flüssigkeitsabgabesystem bekannt. Aus der Druckschrift US 2018/014457 A1 ist ein Verfahren zum Kalibrieren einer Sävorrichtung bekannt. Aus der Druckschrift US 2018/359909 A1 ist ein System zur Abgabe mehrerer landwirtschaftlicher Produkte bekannt. Aus der Druckschrift DE 10 2019 104293 A1 ist ein Verfahren zum Ermitteln einer Konfiguration einer Fördereinrichtung für körniges Material bekannt. Aus der Druckschrift US 7,726,251 B1 ist eine Sämaschine bekannt.

Zum gleichzeitigen Ausbringen von vereinzelten Saatkörnern und Düngerportionen auf eine landwirtschaftliche Nutzfläche werden vermehrt landwirtschaftliche Ausbringmaschinen eingesetzt, deren Ausbringaggregate über eine Vereinzelungseinrichtung zum Vereinzeln von Saatkörnern und eine Portioniereinrichtung zum Erzeugen von Düngerportionen verfügen. Düngerportionen, welche mittels einer Portioniereinrichtung einer landwirtschaftlichen Ausbringmaschine erzeugt werden, können in Abhängigkeit der Düngereigenschaften unterschiedliche maschineninterne Förderdauern in der Ausbringmaschine und/oder unterschiedliche maschinenexterne Flugdauern nach der Abgabe durch die Ausbringmaschine aufweisen. Beispielsweise können die Größe, das Gewicht und die Oberflächenbeschaffenheit der Düngerkörner einen Einfluss auf die maschineninterne Förderdauer der Düngerportion in der Ausbringmaschine und/oder einen Einfluss auf die maschinenexterne Flugdauer der Düngerportion nach der Abgabe durch die Ausbringmaschine haben. Saatkörner, welche mittels einer Vereinzelungseinrichtung einer landwirtschaftlichen Ausbringmaschine vereinzelt werden, können in Abhängigkeit der Saatguteigenschaften ebenfalls unterschiedliche maschineninterne Förderdauern in der Ausbringmaschine und/oder unterschiedliche maschinenexterne Flugdauern nach Abgabe durch die Ausbringmaschine aufweisen. Beispielsweise können die Größe, das Gewicht und die Oberflächenbeschaffenheit der Saatkörner einen Einfluss auf die maschineninterne Förderdauer eines vereinzelten Saatkorns in der Ausbringmaschine und/oder einen Einfluss auf die maschinenexterne Flugdauer eines vereinzelten Saatkorns nach der Abgabe durch die Ausbringmaschine haben. Beispielsweise kann Beize einen Einfluss auf die maschineninterne Förderdauer und die maschinenexterne Flugdauer von Saatkörnern haben.

Um mit einer landwirtschaftlichen Ausbringmaschine unterschiedliche Dünger-Saatgut-Kombinationen ausbringen zu können, ist es erforderlich, dass der Betrieb der Vereinzelungseinrichtung und der Betrieb der Portioniereinrichtung im Rahmen eines Kalibriervorgangs aufeinander abgestimmt werden, sodass eine gewünschte örtliche Ablagebeziehung, beispielsweise ein vorgegebener Längsabstand, der Saatkörner und der Düngerportionen auf der landwirtschaftlichen Nutzfläche erzielt wird.

Die der Erfindung zugrundeliegende Aufgabe besteht somit darin, die Einstellung einer vorgegebenen örtlichen Ablagebeziehung von Saatkörnern und Düngerportionen bei unterschiedlichen Dünger-Saatgut-Kombinationen an einer landwirtschaftlichen Ausbringmaschine zu ermöglichen.

Die Aufgabe wird gelöst durch ein Verfahren der eingangs genannten Art, wobei
- das mobile Prüfgerät ein elektronisches Messrad und eine Betätigungseinrichtung umfasst, wobei das Messrad von einem Bediener entlang eines Ablagepfads bewegt wird und die Ablagepositionen der Saatkörner und Düngerportionen und/oder deren örtliche Ablagebeziehung durch manuelle Betätigung der Betätigungseinrichtung erfasst werden, oder
- das mobile Prüfgerät ein elektronisches Bildaufnahmegerät ist, wobei die Ablagepositionen der während der Kalibrierfahrt abgelegten Saatkörner und Düngerportionen und/oder deren örtliche Ablagebeziehung über eine Auswertung einer oder mehrerer Bildaufnahmen des mobilen Prüfgeräts der während der Kalibrierfahrt abgelegten Saatkörner und Düngerportionen erfasst werden.

Der Betrieb der Vereinzelungseinrichtung und der Betrieb der Portioniereinrichtung können besonders präzise aufeinander abgestimmt werden, wenn der Abstimmung die tatsächliche örtliche Ablagebeziehung der Saatkörner und der Düngerportionen nach der Ablage auf der landwirtschaftlichen Nutzfläche zugrunde gelegt wird. Hierbei werden sowohl das maschineninterne Förderverhalten und das maschinenexterne Flugverhalten der Saatkörner und Düngerportionen als auch weitere Parameter, wie beispielsweise die Auslenkung des Düngeschars oder Bodenverhältnisse berücksichtigt. Durch die zumindest temporäre Vorgabe eines Betriebsverhaltens für die Vereinzelungseinrichtung und/oder die Portioniereinrichtung durch das Steuerungssystem wird die vorgegebene örtliche Ablagebeziehung trotz der saatgutspezifischen maschineninternen Förderdauer der vereinzelten Saatkörner in der Ausbringmaschine und/oder der saatgutspezifischen maschinenexternen Flugdauer der vereinzelten Saatkörner nach der Abgabe durch die Ausbringmaschine sowie der düngerspezifischen maschineninternen Förderdauer der erzeugten Düngerportionen in der Ausbringmaschine und/oder der düngerspezifischen maschinenexternen Flugdauer der erzeugten Düngerportionen nach der Abgabe durch die Ausbringmaschine erreicht. Das Abstimmen des Betriebs der Vereinzelungseinrichtung und des Betriebs der Portioniereinrichtung kann dabei vor oder während des Ausbringvorgangs erfolgen. Die vorgegebene örtliche Ablagebeziehung kann ein beabsichtigter Längsabstand zwischen den vereinzelten Saatkörnern und den erzeugten Düngerportionen auf der landwirtschaftlichen Nutzfläche sein. Der beabsichtigte Längsabstand zwischen den vereinzelten Saatkörnern und den erzeugten Düngerportionen kann auch null sein, sodass die vereinzelten Saatkörner und die erzeugten Düngerportionen in Längsrichtung keinen Abstand zueinander aufweisen. Grundsätzlich können die vereinzelten Saatkörner und die erzeugten Düngerportionen auch in unterschiedlichen Ablagetiefen und/oder in Querrichtung beabstandet voneinander abgelegt werden.

Mittels des Prüfgeräts kann beispielsweise der Längsversatz zwischen den während der Kalibrierfahrt abgelegten Düngerportionen und Saatkörnern auf der landwirtschaftlichen Nutzfläche bestimmt werden. Wenn der mittels des Prüfgeräts ermittelte Längsversatz von dem beabsichtigten Längsabstand zwischen den vereinzelten Saatkörnern und den erzeugten Düngerportionen abweicht, ist dieser durch die Vorgabe eines Betriebsverhaltens für die Vereinzelungseinrichtung und/oder die Portioniereinrichtung dann vor dem eigentlichen Ausbringvorgang einzustellen. Wenn also der beabsichtigte Längsabstand zwischen den vereinzelten Saatkörnern und den erzeugten Düngerportionen null ist und die während der Kalibrierfahrt abgelegten Saatkörner und Düngerportionen einen Längsabstand zueinander aufweisen, ist dieser Längsabstand durch die Vorgabe eines Betriebsverhaltens für die Vereinzelungseinrichtung und/oder die Portioniereinrichtung zu eliminieren, sodass während des eigentlichen Ausbringvorgangs kein Längsversatz zwischen den abgelegten Saatkörnern und Düngerportionen auf der landwirtschaftlichen Nutzfläche vorliegt.

Das Steuerungssystem kann eine elektronische Steuereinheit und/oder eine elektronische Bedieneinheit umfassen. Die elektronische Steuereinheit kann Bestandteil der landwirtschaftlichen Ausbringmaschine sein. Die elektronische Steuereinheit kann ein Jobrechner sein, welcher signalleitend mit der Vereinzelungseinrichtung und/oder der Portioniereinrichtung verbunden ist. Die elektronische Steuereinheit kann Steuersignale für die Vereinzelungseinrichtung und/oder die Portioniereinrichtung erzeugen, über welche der Vereinzelungseinrichtung und/oder der Portioniereinrichtung zumindest temporär ein Betriebsverhalten vorgegeben werden kann. Die elektronische Bedieneinheit kann beispielsweise ein Terminal sein.

Es ist darüber hinaus ein erfindungsgemäßes Verfahren vorteilhaft, bei welchem die von der Vereinzelungseinrichtung vereinzelten Saatkörner zu zeitlich voneinander beabstandeten Kornabgabezeitpunkten von der Vereinzelungseinrichtung, insbesondere in eine Kornförderleitung, abgegeben werden. Alternativ oder zusätzlich werden die von der Portioniereinrichtung erzeugten Düngerportionen zu zeitlich voneinander beabstandeten Düngerabgabezeitpunkten von der Portioniereinrichtung, insbesondere in eine Düngerförderleitung, abgegeben. Über das von dem Steuerungssystem vorgegebene Betriebsverhalten wird vorzugsweise eine Anpassung des Zeitversatzes zwischen den Kornabgabezeitpunkten und den Düngerabgabezeitpunkten veranlasst. Über die Anpassung des Zeitversatzes zwischen den Kornabgabezeitpunkten und den Düngerabgabezeitpunkten wird die örtliche Ablagebeziehung der Saatkörner und der Düngerportionen, insbesondere deren Längsabstand, auf der landwirtschaftlichen Nutzfläche verändert. Über die Anpassung des Zeitversatzes zwischen den Kornabgabezeitpunkten und den Düngerabgabezeitpunkten erfolgt also eine Anpassung der Abgabetaktung der Vereinzelungseinrichtung und der Abgabetaktung der Portioniereinrichtung aufeinander. Die Vereinzelungseinrichtung weist zum Vereinzeln von Saatkörnern beispielsweise ein rotierend angetriebenes Vereinzelungselement auf. Das Vereinzelungselement wird von einem Antrieb der Vereinzelungseinrichtung angetrieben. Der Antrieb der Vereinzelungseinrichtung kann ein elektromotorischer, pneumatischer oder hydraulischer Antrieb sein. Das vorgegebene Betriebsverhalten kann Steuerungsvorgaben für den Antrieb der Vereinzelungseinrichtung umfassen. Die Portioniereinrichtung weist zum Erzeugen von Düngerportionen beispielsweise ein rotierend angetriebenes Portionierelement auf. Das Portionierelement wird von einem Antrieb der Portioniereinrichtung angetrieben. Der Antrieb der Portioniereinrichtung kann ein elektromotorischer, pneumatischer oder hydraulischer Antrieb sein. Das vorgegebene Betriebsverhalten kann Steuerungsvorgaben für den Antrieb der Portioniereinrichtung umfassen. Über das von dem Steuerungssystem vorgegebene Betriebsverhalten kann beispielsweise eine temporäre Abweichung von einem beabsichtigten Drehzahlverhältnis des Vereinzelungselements und des Portionierelements veranlasst werden. Durch die temporäre Abweichung von dem beabsichtigten Drehzahlverhältnis des Vereinzelungselements und des Portionierelements wird der Zeitversatz zwischen den Kornabgabezeitpunkten und den Düngerabgabezeitpunkten verändert, sodass beispielsweise ein vorgegebener Längsabstand zwischen den vereinzelten Saatkörnern und den erzeugten Düngerportionen auf der landwirtschaftlichen Nutzfläche eingestellt wird. Alternativ kann die Portioniereinrichtung zum Erzeugen von Düngerportionen auch ein Portionierventil aufweisen, welches beim Öffnen eine Düngerportion abgibt, insbesondere in eine Düngerförderleitung. In diesem Fall entsprechen die Düngerabgabezeitpunkte den Ventilöffnungszeitpunkten. Durch das Anpassen der Ventilöffnungszeitpunkte kann somit ebenfalls der Zeitversatz zwischen dem Kornabgabezeitpunkten und den Düngerabgabezeitpunkten verändert und somit der Längsabstand der Saatkörner und Düngerportionen auf der landwirtschaftlichen Nutzfläche angepasst werden.

In einer weiteren bevorzugten Ausführungsform des erfindungsgemäßen Verfahrens sind an der landwirtschaftlichen Ausbringmaschine Ablageparameter einstellbar, welche die Ablagepositionen der abgelegten Saatkörner und Düngerportionen und/oder deren örtliche Ablagebeziehung beeinflussen, wobei die Ablageparameter während der Kalibrierfahrt und einem nach der Kalibrierfahrt folgenden Ausbringvorgang übereinstimmen. Die Ablageparameter können beispielsweise die Fahrgeschwindigkeit, die Aussaatstärke, den Vereinzelungsluftdruck in der Vereinzelungseinrichtung und/oder die Düngermenge einer Düngerportion betreffen. Wenn die Ablageparameter während der Kalibrierfahrt und während des darauffolgenden Ausbringvorgangs übereinstimmen, kann auf Grundlage der mittels des Prüfgeräts erfassten Abstandsdaten direkt ein auf den nach der Kalibrierfahrt folgenden Ausbringvorgang angepasstes Abstimmen des Betriebs der Vereinzelungseinrichtung und des Betriebs der Portioniereinrichtung aufeinander erfolgen.

Das erfindungsgemäße Verfahren wird ferner dadurch vorteilhaft weitergebildet, dass an der landwirtschaftlichen Ausbringmaschine Ablageparameter einstellbar sind, welche die Ablagepositionen der abgelegten Saatkörner und Düngerportionen und/oder deren örtliche Ablagebeziehung beeinflussen, wobei zumindest ein Ablageparameter, insbesondere die Fahrgeschwindigkeit, während der Kalibrierfahrt und einem nach der Kalibrierfahrt folgenden Ausbringvorgang voneinander abweichen. Beispielsweise stimmen die Ablageparameter mit Ausnahme der Fahrgeschwindigkeit während der Kalibrierfahrt und während dem nach der Kalibrierfahrt folgenden Ausbringvorgang überein und betreffen eine bevorzugte Parameterkombination. Das Steuerungssystem berücksichtigt beim Ermitteln des bzw. der erforderlichen Betriebsverhalten der Vereinzelungseinrichtung und/oder der Portioniereinrichtung die während der Kalibrierfahrt und während dem nach der Kalibrierfahrt folgenden Ausbringvorgang voneinander abweichenden Ablageparameter. Auf diese Weise ist es beispielsweise möglich, dass die Kalibrierfahrt mit einer anderen Fahrgeschwindigkeit erfolgt als der Ausbringvorgang nach der Kalibrierfahrt. Dadurch, dass das Steuerungssystem beim Ermitteln des bzw. der erforderlichen Betriebsverhalten der Vereinzelungseinrichtung und/oder der Portioniereinrichtung die während der Kalibrierfahrt und während dem nach der Kalibrierfahrt folgenden Ausbringvorgang voneinander abweichenden Ablageparameter berücksichtigt, kann beispielsweise auch eine Veränderung der Fahrgeschwindigkeit während des Ausbringvorgangs erfolgen, ohne dass erneut eine Kalibrierfahrt zur Umsetzung der vorgegebenen örtlichen Ablagebeziehung von Saatkörnern und Düngerportionen auf der landwirtschaftlichen Nutzfläche erforderlich ist. Das Steuerungssystem kann beim Ermitteln der vorzugebenden Betriebsverhalten beispielsweise einen geschwindigkeitsabhängigen Korrekturfaktor oder eine Korrekturkurve berücksichtigen. Hierdurch kann die beabsichtigte örtliche Ablagebeziehung beim späteren Ausbringvorgang auch während einer Beschleunigung oder während eines Bremsvorgangs beibehalten werden.

Es ist außerdem ein erfindungsgemäßes Verfahren vorteilhaft, bei welchem an der landwirtschaftlichen Ausbringmaschine Ablageparameter einstellbar sind, welche die Ablagepositionen der abgelegten Saatkörner und Düngerportionen und/oder deren örtliche Ablagebeziehung beeinflussen, wobei zumindest ein Ablageparameter während der Kalibrierfahrt verändert wird. Durch die Veränderung von spezifischen Ablageparametern während der Kalibrierfahrt kann festgestellt werden, wie sich die Veränderung dieses Ablageparameters auf die örtliche Ablagebeziehung von Saatkörnern und Düngerportionen auswirkt. Beispielsweise können während der Kalibrierfahrt mehrere unterschiedliche Fahrgeschwindigkeiten eingestellt werden, um den Einfluss der Fahrgeschwindigkeit auf die örtliche Ablagebeziehung von Saatkörnern und Düngerportionen zu erfassen.

Es ist darüber hinaus ein erfindungsgemäßes Verfahren vorteilhaft, bei welchem das Steuerungssystem das Betriebsverhalten, welches der Vereinzelungseinrichtung und/oder der Portioniereinrichtung zumindest temporär vorgegeben wird, in Abhängigkeit zumindest eines Kalibrierwerts ermittelt, wobei der zumindest eine Kalibrierwert von dem Steuerungssystem und/oder dem Prüfgerät aus den mittels des Prüfgeräts erfassten Ablagepositionen der Saatkörner und Düngerportionen und/oder deren örtliche Ablagebeziehung ermittelt wird. Mittels des mobilen Prüfgeräts werden beispielsweise die Längsabstände zwischen den abgelegten Saatkörnern und den abgelegten Düngerportionen ermittelt. Die Längsabstandsermittlung erfolgt vorzugsweise über mehrere Saatkörner und Düngerportionen, sodass Variationen der Längsverteilung berücksichtigt werden. Über die mehreren Längsabstandsmessungen kann beispielsweise ein mittlerer Längsabstand berechnet werden, auf dessen Grundlage dann der Kalibrierwert ermittelt wird. Das mobile Prüfgerät kann eine Abstandsmesseinrichtung, beispielsweise einen Messstab oder ein Maßband umfassen, mit welcher der Längsabstand von Saatkörnern oder Düngerportionen durch einen Bediener auch manuell erfasst werden kann. Der Bediener kann die erfassten Längsabstände dann selbst mitteln, wobei das Mitteln der erfassten Längsabstände auch durch das Steuerungssystem vorgenommen werden kann.

In einer erfindungsgemäßen Ausführungsform des Verfahrens umfasst das mobile Prüfgerät ein elektronisches Messrad und eine Betätigungseinrichtung, wobei das Messrad von einem Bediener entlang eines Ablagepfads bewegt wird und die Ablagepositionen der Saatkörner und Düngerportionen und/oder deren örtliche Ablagebeziehung durch manuelle Betätigung der Betätigungseinrichtung erfasst werden. Die Betätigungseinrichtung kann beispielsweise zwei Tasten umfassen. Mit einer ersten Taste können die Ablagepositionen der Saatkörner erfasst werden. Mit einer zweiten Taste können die Ablagepositionen der Düngerportionen erfasst werden. Das mobile Prüfgerät kann auf Grundlage der Betätigung der Betätigungseinrichtung dann den Kalibrierwert berechnen. Das mobile Prüfgerät kann Fehl- und Doppelstellen beim Saatgut erkennen und bei der Kalibrierwertberechnung entsprechend berücksichtigen. Das mobile Prüfgerät kann bei der Kalibrierwertberechnung ferner einen Variationskoeffizienten vom Saatgut und/oder Dünger berücksichtigen, um Fehler auszuschließen. Der Variationskoeffizient ist ein relatives Maß für die Streuung und bezieht sich hier auf die Längsabweichung. Das mobile Prüfgerät kann optische Hilfsmittel umfassen, um eine besonders präzise Erfassung der Ablagepositionen der Saatkörner und/oder Düngerportionen entlang des Ablagepfads zu ermöglichen.

Die optischen Hilfsmittel können einen Zeiger in Richtung des Ablagepfads oder eine auf den Ablagepfad projizierte Markierung umfassen, so dass Parallaxefehler bei der Erfassung der Ablagepositionen möglichst vermieden werden.

In einer anderen erfindungsgemäßen Ausführungsform des Verfahrens ist das mobile Prüfgerät ein elektronisches Bildaufnahmegerät, wobei die Ablagepositionen der während er Kalibrierfahrt abgelegten Saatkörner und Düngerportionen und/oder deren örtliche Ablagebeziehung über eine Auswertung einer oder mehrerer Bildaufnahmen des mobilen Prüfgeräts der während der Kalibrierfahrt abgelegten Saatkörner und Düngerportionen erfasst werden. Beispielsweise ist das mobile Prüfgerät ein Mobilfunkgerät, auf welchem eine Anwendung zur Ermittlung der Ablagepositionen der während der Kalibrierfahrt abgelegten Saatkörner und Düngerportionen und/oder deren örtlicher Ablagebeziehung installiert ist. Die Ablagepositionen der während der Kalibrierfahrt abgelegten Saatkörner und Düngerportionen und/oder deren örtliche Ablagebeziehung können über Einzelbilder oder über ein oder mehrere Videos erfasst werden. Die Auswertung der einen oder der mehreren Bildaufnahmen umfasst vorzugsweise eine Bildanalyse. Da es für eine Bildverarbeitung schwierig sein kann, das Korn und den Mittelpunkt der Düngerportion zu ermitteln, können Korn und Düngerportion auch vom Bediener im Bild markiert werden. Es kann erforderlich sein, dass sich ein Maßstabsobjekt im Bild befindet, damit die Beabstandung berechnet und der Kalibrierwert ermittelt werden kann.

In einer weiteren bevorzugten Ausführungsform des erfindungsgemäßen Verfahrens werden die Ablagepositionen der während der Kalibrierfahrt abgelegten Saatkörner und Düngerportionen, deren örtliche Ablagebeziehung und/oder ein daraus ermittelter Kalibrierwert von dem mobilen Prüfgerät per Datenübertragung an das Steuerungssystem übermittelt. Die Übertragung kann kabellos oder kabelgebunden erfolgen. Beispielsweise erfolgt die Übertragung per Bluetooth, W-LAN und/oder Internet. Die Daten werden vorzugsweise von einem Terminal des Steuerungssystems empfangen, sodass das Terminal auf Grundlage der Ablagepositionen der während der Kalibrierfahrt abgelegten Saatkörner und Düngerportionen, deren örtlicher Ablagebeziehung und/oder des daraus ermittelten Kalibrierwerts ein geeignetes Betriebsverhalten für die Portioniereinrichtung und/oder die Vereinzelungseinrichtung ermittelt. Das ermittelte Betriebsverhalten kann das Terminal dann einer elektronischen Steuereinheit der landwirtschaftlichen Ausbringmaschine mitteilen, wobei die elektronische Steuereinheit entsprechende Steuersignale für die Vereinzelungseinrichtung und/oder die Portioniereinrichtung zur Umsetzung des Betriebsverhaltens erzeugt und die Vereinzelungseinrichtung und/oder die Portioniereinrichtung übermittelt. Alternativ oder zusätzlich können die Ablagepositionen der während der Kalibrierfahrt abgelegten Saatkörner und Düngerportionen, deren örtliche Ablagebeziehung und/oder ein daraus ermittelter Kalibrierwert manuell an einer Eingabeeinrichtung, insbesondere einem Terminal, des Steuerungssystems vom Bediener eingegeben werden.

In einer alternativen Ausführungsform des erfindungsgemäßen Verfahrens werden die vereinzelten Saatkörner während der Kalibrierfahrt über eine Kornablageeinrichtung der landwirtschaftlichen Ausbringmaschine auf die landwirtschaftliche Nutzfläche abgelegt, wobei die Kornablageeinrichtung in eine Ausbringkonfiguration, in welcher eine Bedeckung der abgelegten Saatkörner mit Erde erfolgt, und in eine Kalibrierfahrtkonfiguration, in welcher zumindest annähernd keine Bedeckung der abgelegten Saatkörner mit Erde erfolgt, verbringbar ist, wobei sich die Kornablageeinrichtung während der Kalibrierfahrt in der Kalibrierfahrtkonfiguration befindet. Da die Saatfurche, in welche die Saatkörner abgelegt werden, teilweise von alleine zusammenfällt, ist die gänzliche Vermeidung einer Erdbedeckung der Saatkörner in der Praxis nicht umsetzbar. In der Kalibrierfahrtkonfiguration wird jedoch vermieden, dass die Saatkörner aktiv durch die Kornablageeinrichtung mit Erde bedeckt werden. Die Kornablageeinrichtung kann beispielsweise ein Säschar sein. In der Kalibrierfahrtkonfiguration kann die Kornablageeinrichtung sich in einem ausgehobenen Zustand befinden. Beispielsweise wird die Kornablageeinrichtung knapp über der Erdoberfläche über die landwirtschaftliche Nutzfläche geführt. In der Kalibrierfahrtkonfiguration kann ein Element zum Schließen der Säfurche deaktiviert sein. Ein Ausheben ist in diesem Fall nicht erforderlich, sodass die Kornablage in der beabsichtigten Ablagetiefe erfolgen kann. In der Kalibrierfahrtkonfiguration kann die Ablagetiefe der Kornablageeinrichtung reduziert sein, damit zum Freilegen der Saatkörner weniger Erde bewegt werden muss und dennoch der Fangprozess annähernd der herkömmlichen Ablage entspricht. In der Kalibrierfahrtkonfiguration kann eine anderweitige Stellung der Kornablageeinrichtung mithilfe einer Absteckvorrichtung eingestellt sein. In der Kalibrierfahrtkonfiguration können auch zusätzlich Elemente zum Öffnen oder Freihalten der Säfurche aktiviert oder angebaut sein, mittels derer die Saatkörner direkt nach der Kalibrierfahrt sichtbar bleiben. Vor der Kalibrierfahrt kann auf der landwirtschaftlichen Nutzfläche eine Art Gewebe, Matte oder Folie ausgelegt werden. Die Maschine fährt mit der Zielgeschwindigkeit und den gewünschten Ablagetiefen über das Gewebe, die Matte oder die Folie und drückt das Material in das Erdreich, sodass die Saatkörner von dem Gewebe, der Matte oder der Folie quer zur Fahrtrichtung gefangen und fixiert werden. Im Anschluss an diese Fahrt kann das Gewebe, die Matte oder die Folie wieder seitlich langgezogen oder teilweise aufgeklappt werden, ohne dass sich die abgelegten Körner mit dem Erdreich vermischen. Dadurch muss keine Erde freigelegt werden und es wird verhindert, dass Saatkörner überstehen oder vergraben werden.

In einer weiteren bevorzugten Ausführungsform des erfindungsgemäßen Verfahrens werden die erzeugten Düngerportionen während der Kalibrierfahrt über eine Düngerablageeinrichtung der landwirtschaftlichen Ausbringmaschine auf die landwirtschaftliche Nutzfläche abgelegt, wobei die Düngerablageeinrichtung in eine Ausbringkonfiguration, in welcher eine Bedeckung der abgelegten Düngerkörner mit Erde erfolgt, und in eine Kalibrierfahrtkonfiguration, in welcher eine reduzierte Bedeckung der abgelegten Düngerportionen mit Erde erfolgt, verbringbar ist, wobei sich die Düngerablageeinrichtung während der Kalibrierfahrt in der Kalibrierfahrtkonfiguration befindet. Es soll eine geringfügige Bedeckung mit Erde auch in der Kalibrierfahrtkonfiguration umgesetzt werden, da sich die Düngerportion sonst mangels einer ausreichenden Fangwirkung zu stark verteilt, sodass keine gebündelte portionsweise Abgabe des Düngers erfolgt. Durch die reduzierte Bedeckung der abgelegten Düngerportionen ist jedoch der Aufwand beim Freilegen stark reduziert. Die Düngerablageeinrichtung kann beispielsweise ein Düngeschar sein. In der Kalibrierfahrtkonfiguration kann die Düngerablageeinrichtung sich in einem ausgehobenen Zustand befinden. Beispielsweise wird die Düngerablageeinrichtung knapp über der Erdoberfläche der landwirtschaftlichen Nutzfläche geführt. In der Kalibrierfahrtkonfiguration kann ein Element zum Schließen der Düngerfurche deaktiviert sein. Ein Ausheben ist in diesem Fall nicht erforderlich, sodass die Düngerablage in der beabsichtigten Ablagetiefe erfolgen kann. In der Kalibrierfahrtkonfiguration kann die Ablagetiefe der Düngerablageeinrichtung reduziert sein, damit zum Freilegen der Düngerportion weniger Erde bewegt werden muss und dennoch der Fangprozess annähernd der herkömmlichen Ablage entspricht. In der Kalibrierfahrtkonfiguration kann eine anderweitige Stellung der Düngerablageeinrichtung mithilfe einer Absteckvorrichtung eingestellt sein. In der Kalibrierfahrtkonfiguration können zusätzliche Elemente zum Öffnen oder Freihalten der Düngerfurche aktiviert oder angebaut sein, mittels derer die Düngerportionen direkt nach der Kalibrierfahrt sichtbar bleiben. Vor der Kalibrierfahrt kann auf dem Acker eine Art Gewebe, Matte oder Folie ausgelegt werden. Die Maschine fährt mit der Zielgeschwindigkeit und den gewünschten Ablagetiefen über das Gewebe, die Folie oder die Matte und drückt das Material in das Erdreich, sodass die Düngerportionen von dem Gewebe, der Matte oder der Folie quer zur Fahrtrichtung gefangen und fixiert werden. Im Anschluss an diese Fahrt kann das Gewebe, die Matte oder die Folie wieder seitlich langgezogen oder teilweise aufgeklappt werden, ohne dass sich die abgelegten Portionen mit Erdreich vermischen. Dadurch muss keine Erde freigelegt werden und es wird verhindert, dass Düngerportionen übersehen oder vergraben werden.

Die der Erfindung zugrundeliegende Aufgabe wird ferner durch ein Kalibriersystem der eingangs genannten Art gelöst, wobei
- das mobile Prüfgerät ein elektronisches Messrad und eine Betätigungseinrichtung umfasst, wobei das Messrad von einem Bediener entlang eines Ablagepfads bewegbar ist und die Ablagepositionen der Saatkörner und Düngerportionen und/oder deren örtliche Ablagebeziehung durch manuelle Betätigung der Betätigungseinrichtung erfassbar sind, oder
- das mobile Prüfgerät ein elektronisches Bildaufnahmegerät ist, wobei die Ablagepositionen der während der Kalibrierfahrt abgelegten Saatkörner und Düngerportionen und/oder deren örtliche Ablagebeziehung über eine Auswertung einer oder mehrerer Bildaufnahmen des mobilen Prüfgeräts der während der Kalibrierfahrt abgelegten Saatkörner und Düngerportionen erfassbar sind.

In einer bevorzugten Ausführungsform ist das erfindungsgemäße Kalibriersystem dazu eingerichtet, zum Ausführen des Verfahrens nach einer der vorstehend beschriebenen Ausführungsformen verwendet zu werden. Hinsichtlich der Vorteile und Modifikationen des erfindungsgemäßen Kalibriersystems wird somit auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausbringaggregat, bei welchem der Betrieb der Vereinzelungseinrichtung und der Betrieb der Portioniereinrichtung mittels des erfindungsgemäßen Verfahrens aufeinander abstimmbar sind;
- Fig. 2: ein Ausführungsbeispiel des erfindungsgemäßen Kalibriersystems in einer schematischen Darstellung;
- Fig. 3: ein weiteres Ausführungsbeispiel des erfindungsgemäßen Kalibriersystems in einer schematischen Darstellung; und
- Fig. 4: ein Ausbringaggregat, dessen Kornablageeinrichtung in eine Ausbringkonfiguration verbringbar ist, in einer schematischen Darstellung.

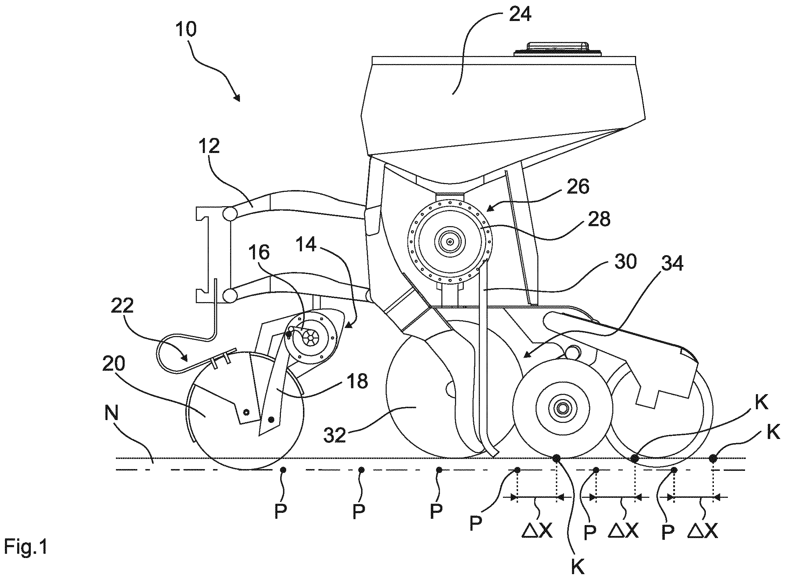

Die Fig. 1 zeigt ein Ausbringaggregat 10 einer landwirtschaftlichen Ausbringmaschine, mittels welcher Dünger in Form von Düngerportionen P und Saatgut in Form von vereinzelten Saatkörnern K in aufeinander abgestimmter Weise auf eine landwirtschaftliche Nutzfläche N ausbringbar sind. Die landwirtschaftliche Ausbringmaschine weist vorzugsweise mehrere der dargestellten Ausbringaggregate 10 auf, welche in Querrichtung, also quer zur Fahrtrichtung, nebeneinander angeordnet sind.

Das dargestellte Ausbringaggregat 10 weist eine Halterung 12 auf, welche ein Parallelogrammgestänge umfasst und mittels welcher das Ausbringaggregat 10 an einem Querträger der landwirtschaftlichen Ausbringmaschine befestigbar ist.

Das Ausbringaggregat 10 weist ferner eine Portioniereinrichtung 14 auf, mittels welcher Düngerportionen P erzeugt werden können. Die Portioniereinrichtung 14 weist einen Antrieb auf, welcher ein als Portionierflügel ausgebildetes Portionierelement 16 rotatorisch antreibt. Der Antrieb der Portioniereinrichtung 14 kann ein elektromotorischer, ein hydraulischer oder pneumatischer Antrieb sein.

Das sich in dem Gehäuse der Portioniereinrichtung 14 drehende Portionierelement 16 sammelt den kontinuierlich in das Gehäuse der Portioniereinrichtung 14 eintretenden Dünger ein und erzeugt somit bei jeder Umdrehung eine Düngerportion P. Die von der Portioniereinrichtung 14 erzeugten Düngerportionen P werden aufgrund der Drehbewegung des Portionierelements 16 zu zeitlich voneinander beabstandeten Düngerabgabezeitpunkten von der Portioniereinrichtung 14 in eine Düngerförderleitung 18 abgegeben. Die Düngerförderleitung 18 ist ein Schusskanal, über welchen die erzeugte Düngerportion P zunächst maschinenintern in Richtung der landwirtschaftlichen Nutzfläche N gefördert wird. Nach dem Verlassen der Düngerförderleitung 18 befindet sich die erzeugte Düngerportion P zunächst in einer Flugphase, bevor die Düngerportion P den Grund einer Düngerfurche erreicht. Die Düngerfurche wird mittels eines Düngeschars 22 erzeugt, wobei das Düngeschar 22 ein zwei Schneidscheiben 20 aufweisendes Doppelscheibenschar sein kann.

Das Ausbringaggregat 10 weist ferner eine Vereinzelungseinrichtung 26 auf, mittels welcher die in dem Vorratsbehälter 24 bevorrateten Saatkörner K vereinzelt werden können. Hierzu weist die Vereinzelungseinrichtung 26 einen Antrieb auf, welcher das als Vereinzelungsscheibe ausgebildete Vereinzelungselement 28 der Vereinzelungseinrichtung 26 rotatorisch antreibt. Der Antrieb der Vereinzelungseinrichtung 26 kann ein elektromotorischer, pneumatischer oder hydraulischer Antrieb sein.

Das als Vereinzelungsscheibe ausgebildete Vereinzelungselement 28 weist Kornaufnahmeausnehmungen auf, welche jeweils ein Saatkorn aufnehmen und somit vereinzeln. Die vereinzelten Saatkörner K werden dann zu zeitlich voneinander beabstandeten Kornabgabezeitpunkten von der Vereinzelungseinrichtung 26 in eine Kornförderleitung 30 abgegeben. Die Kornförderleitung 30 ist ein Schusskanal und dient zum Fördern der vereinzelten Saatkörner K in Richtung der landwirtschaftlichen Nutzfläche N. Nach Verlassen der Kornförderleitung 30 befinden sich die vereinzelten Saatkörner K zunächst in einer Flugphase, bevor diese den Grund einer Säfurche erreichen. Die Säfurche wird über ein oder mehrere Schneidscheiben 32 des Säschars 34 erzeugt.

Die erzeugten Düngerportionen P können in Abhängigkeit der Düngereigenschaften unterschiedliche maschineninterne Förderdauern in der Ausbringmaschine und unterschiedliche maschinenexterne Flugdauern nach der Abgabe durch die Ausbringmaschine aufweisen. Beispielsweise können die Größe, das Gewicht und die Oberflächenbeschaffenheit der Düngerkörner einen Einfluss auf die maschineninterne Förderdauer und die maschinenexterne Flugdauer der Düngerportionen haben. Die vereinzelten Saatkörner K können in Abhängigkeit der Saatguteigenschaften ebenfalls unterschiedliche maschineninterne Förderdauern in der Ausbringmaschine und unterschiedliche maschinenexterne Flugdauern nach der Abgabe durch die Ausbringmaschine aufweisen. Beispielsweise können die Größe, das Gewicht und die Oberflächenbeschaffenheit der Saatkörner K einen Einfluss auf die maschineninterne Förderdauer und die maschinenexterne Flugdauer der vereinzelten Saatkörner K haben.

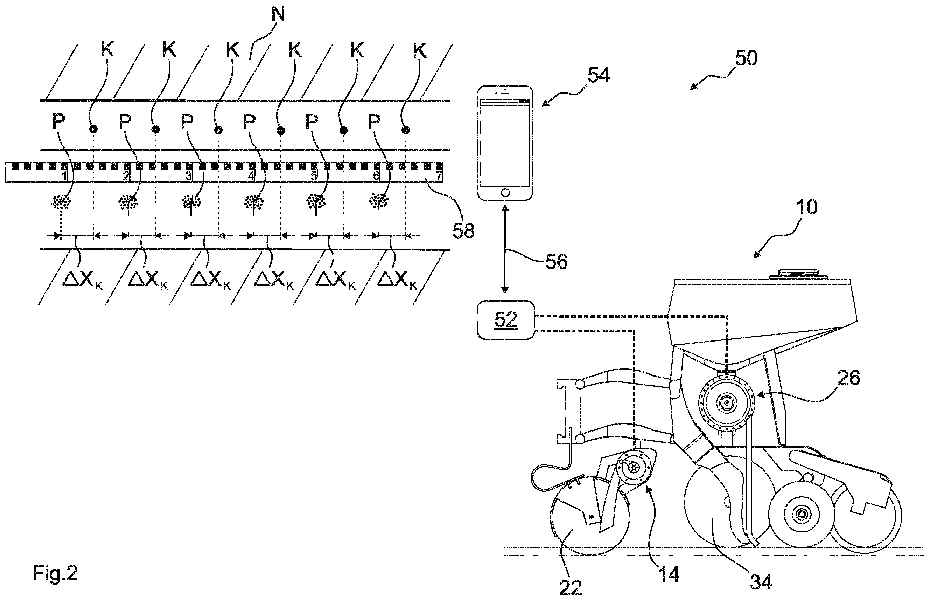

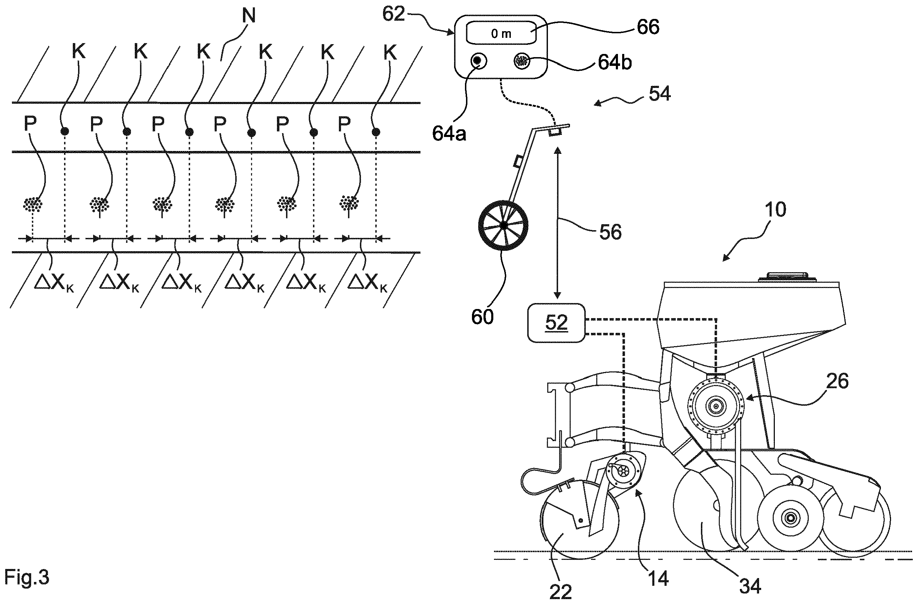

Zur Erzielung einer vorgegebenen örtlichen Ablagebeziehung Δx der Saatkörner K und der Düngerportionen P auf der landwirtschaftlichen Nutzfläche N sind der Betrieb der Vereinzelungseinrichtung 26 und der Betrieb der Portioniereinrichtung 14 aufeinander abzustimmen. Die vorgegebene Ablagebeziehung Δx kann beispielsweise ein vorgegebener Längsabstand zwischen den Düngerportionen P und den Saatkörnern K sein, wobei der vorgegebene Längsabstand auch null sein kann, sodass die vereinzelten Saatkörner K und die erzeugten Düngerportionen P in Längsrichtung keinen Abstand zueinander aufweisen. Zum Anpassen des Längsabstands Δx zwischen den abgelegten vereinzelten Saatkörnern K und den abgelegten erzeugten Düngerportionen P wird der Portioniereinrichtung 14 und/oder der Vereinzelungseinrichtung 26 zumindest temporär ein Betriebsverhalten von einem Steuerungssystem 52 (vgl. Fig. 2 & 3) vorgegeben. Über das von dem Steuerungssystem 52 vorgegebene Betriebsverhalten für die Portioniereinrichtung 14 und/oder die Vereinzelungseinrichtung 26 wird eine Anpassung des Zeitversatzes zwischen den Kornabgabezeitpunkten an der Vereinzelungseinrichtung 26 und den Düngerabgabezeitpunkten an der Portioniereinrichtung 14 veranlasst. Bei dem dargestellten Ausbringaggregat 10 kann dies dadurch erfolgen, dass über das von dem Steuerungssystem 52 vorgegebene Betriebsverhalten eine temporäre Abweichung von einem beabsichtigten Drehzahlverhältnis des Vereinzelungselements 28 und des Portionierelements 16 veranlasst wird, sodass sich der Längsabstand Δx zwischen den Düngerportionen P und den Saatkörnern K verändert.

In den Fig. 2 und 3 sind Kalibriersysteme 50 dargestellt, deren Steuerungssysteme 52 einer Portioniereinrichtung 14 und/oder einer Vereinzelungseinrichtung 26 zumindest temporär ein Betriebsverhalten vorgeben, um eine vorgegebene örtliche Ablagebeziehung Δx von Saatkörnern K und Düngerportionen P auf der landwirtschaftlichen Nutzfläche N zu erzielen.

Zur Erzielung der vorgegebenen örtlichen Ablagebeziehung Δx von Saatkörnern K und Düngerportionen P auf der landwirtschaftlichen Nutzfläche N ist zunächst das Ausführen einer Kalibrierfahrt mittels der landwirtschaftlichen Ausbringmaschine erforderlich. Im Rahmen der Kalibrierfahrt werden durch die Vereinzelungseinrichtung 26 vereinzelte Saatkörner K und durch die Portioniereinrichtung 14 erzeugte Düngerportionen P auf die landwirtschaftliche Nutzfläche N abgelegt. Die Fig. 2 und 3 zeigen jeweils ein Ablagemuster aus Saatkörnern K und Düngerportionen P, welches im Rahmen einer Kalibrierfahrt erzeugt wurde. An der landwirtschaftlichen Ausbringmaschine sind Ablageparameter einstellbar, welche die Ablagepositionen P_{K}, P_{P} der abgelegten Saatkörner K und Düngerportionen P beeinflussen. Diese Ablageparameter sind beispielsweise die Fahrgeschwindigkeit, die Aussaatstärke, der Vereinzelungsluftdruck an der Vereinzelungseinrichtung 26 und die Düngermenge einer Düngerportion P. Mit Ausnahme der Fahrgeschwindigkeit stimmen die während der Kalibrierfahrt und einem nach der Kalibrierfahrt folgenden Ausbringvorgang eingestellten Ablageparameter der Ausbringmaschine überein. Die Kalibrierfahrt wird jedoch in einer Fahrgeschwindigkeit durchgeführt, welche von der geplanten Fahrgeschwindigkeit bei dem auf die Kalibrierfahrt folgenden Ausbringvorgang abweicht. Während der Kalibrierfahrt werden mehrere unterschiedliche Fahrgeschwindigkeiten eingestellt. Die als Säschar 34 ausgebildete Kornablageeinrichtung der landwirtschaftlichen Ausbringmaschine und die als Düngeschar 22 ausgebildete Düngerablageeinrichtung der landwirtschaftlichen Ausbringmaschine befinden sich während der Kalibrierfahrt in einer Kalibrierfahrtkonfiguration. In der Kalibrierfahrtkonfiguration des Säschars 34 erfolgt lediglich eine geringfügige Bedeckung der abgelegten Saatkörner K mit Erde. In der Kalibrierfahrtkonfiguration des Düngeschars 22 erfolgt eine reduzierte Bedeckung der abgelegten Düngerportionen P mit Erde. Durch die Kalibrierfahrtkonfiguration des Säschars 34 und des Düngeschars 22 muss zum Freilegen der abgelegten Saatkörner K und Düngerportionen P weniger Erde bewegt werden, sodass die Freilegung der abgelegten Saatkörner K und Düngerportionen P vereinfacht wird.

Nach dem Ablegen der Saatkörner K und Düngerportionen P im Rahmen der Kalibrierfahrt sind diese zunächst so freizulegen, dass die Ablagepositionen P_{K} der Saatkörner K und die Ablagepositionen P_{P} der Düngerportionen P optisch bzw. visuell erfasst werden können. Dadurch, dass die Ablagepositionen P_{K}, P_{P} der Saatkörner K und Düngerportionen P nun sichtbar sind, kann auch die örtliche Ablagebeziehung Δx_{K}, in diesem Fall der Längsabstand, zwischen den abgelegten Saatkörnern K und Düngerportionen P optisch bzw. visuell erfasst werden. Die Ablagepositionen P_{K}, P_{P} der während der Kalibrierfahrt abgelegten Saatkörner K und Düngerportionen P und/oder deren örtliche Ablagebeziehung Δx_{K} werden mittels eines mobilen Prüfgeräts 54 erfasst.

Bei dem in der Fig. 2 dargestellten Kalibriersystem 50 ist das mobile Prüfgerät 54 ein elektronisches Bildaufnahmegerät, nämlich ein Smartphone. Nach dem Ausführen der Kalibrierfahrt werden mittels des mobilen Prüfgeräts 54 eine oder mehrere Bildaufnahmen der abgelegten Saatkörner K und Düngerportionen P erzeugt. Die Ablagepositionen P_{K}, P_{P} der während der Kalibrierfahrt abgelegten Saatkörner K und Düngerportionen P und deren örtliche Ablagebeziehung Δx_{K} werden über eine Auswertung der Bildaufnahmen des mobilen Prüfgeräts 54 erfasst. Auf dem mobilen Prüfgerät 54 ist eine Anwendung installiert, welche eine Bildanalyse der mit dem mobilen Prüfgerät 54 erzeugten Bildaufnahmen zur Erfassung der Ablagepositionen P_{K}, P_{P} der Saatkörner K und Düngerportionen P durchführt. Dabei kann die Anwendung die Saatkörner K und Düngerportionen P entweder eigenständig identifizieren oder eine vorherige Markierung der entsprechenden Ablagepositionen P_{K}, P_{P} durch einen Bediener voraussetzen. Es kann erforderlich sein, dass die Anwendung auf dem mobilen Prüfgerät 54 zur Ermittlung des Längsabstands Δx_{K} eine im Nahbereich der Saatkörner K und Düngerportionen P angeordnete Referenzleiste 58 benötigt, welche als Längen- bzw. Abstandsreferenz dienende Markierungen aufweist.

Die Ablagepositionen P_{K}, P_{P} der während der Kalibrierfahrt abgelegten Saatkörner K und Düngerportionen P, deren örtliche Ablagebeziehung Δx_{K} und/oder ein daraus ermittelter Kalibrierwert werden anschließend von dem mobilen Prüfgerät 54 über die signalleitende Verbindung 56 per Datenübertragung an das Steuerungssystem 52 übermittelt. Die Übertragung kann grundsätzlich kabellos oder kabelgebunden erfolgen, wobei zur Datenübertragung beispielsweise Bluetooth, W-LAN und das Internet genutzt werden können. Die Daten werden von dem mobilen Prüfgerät 54 entweder zunächst an ein Terminal des Steuerungssystems 52 oder direkt an eine elektronische Steuereinheit des Steuerungssystems 52 übermittelt, welche Bestandteil der landwirtschaftlichen Ausbringmaschine ist.

Das mit der Vereinzelungseinrichtung 26 und der Portioniereinrichtung 14 signalleitend verbundene Steuerungssystem 52 ermittelt auf Grundlage der mittels des Prüfgeräts 54 erfassten Ablagepositionen P_{K}, P_{P} der Saatkörner K und Düngerportionen P und/oder deren örtlicher Ablagebeziehung Δx_{K} ein Betriebsverhalten für die Vereinzelungseinrichtung 26 und/oder die Portioniereinrichtung 14, über welches die vorgegebene örtliche Ablagebeziehung Δx von Saatkörnern K und Düngerportionen P erzielt werden kann. Die vorgegebene örtliche Ablagebeziehung Δx von Saatkörnern K und Düngerportionen P kann beispielsweise deren Längsabstand betreffen, wobei der vorgegebene Längsabstand zwischen den Saatkörnern K und Düngerportionen P auch null sein kann.

Zur Erzielung der vorgegebenen örtlichen Ablagebeziehung Δx von Saatkörnern K und Düngerportionen P kann das Steuerungssystem 52 beispielsweise eine temporäre Abweichung von einem beabsichtigten Drehzahlverhältnis des Vereinzelungselements 28 der Vereinzelungseinrichtung 26 und des Portionierelements 16 der Portioniereinrichtung 14 veranlassen.

Bei dem in der Fig. 3 dargestellten Kalibriersystem 50 weist das mobile Prüfgerät 54 ein elektronisches Messrad 60 und eine Betätigungseinrichtung 62 auf. Das Messrad 60 wird von einem Bediener entlang eines Ablagepfads bewegt, um die Ablagepositionen P_{K}, P_{P} der im Rahmen einer Kalibrierfahrt abgelegten Saatkörner K und Düngerportionen P und deren örtliche Ablagebeziehung Δx_{K} durch manuelle Betätigung der Betätigungseinrichtung 62 zu erfassen. Die Betätigungseinrichtung 62 weist zwei Tasten 64a, 64b auf. Mit der ersten Taste 64a können die Ablagepositionen P_{K} der Saatkörner K erfasst werden. Mit der zweiten Taste 64b können die Ablagepositionen P_{P} der Düngerportionen P erfasst werden. Ferner kann das Prüfgerät 54 eine Anzeige 66 aufweisen, über welche der Längsabstand Δx_{K} zwischen den während der Kalibrierfahrt abgelegten Düngerportionen P und Saatkörnern K während der Positionserfassung angezeigt wird.

Das mobile Prüfgerät 54 kann auf Grundlage der erfassten Ablagepositionen P_{K}, P_{P} der Saatkörner K und Düngerportionen P dann einen Kalibrierwert berechnen, welcher dann von dem Steuerungssystem 52 zum Abstimmen des Betriebs der Vereinzelungseinrichtung 26 und des Betriebs der Portioniereinrichtung 14 aufeinander verwendet werden kann. Das mobile Prüfgerät 54 kann bei der Kalibrierwertberechnung Fehl- und Doppelstellen beim Saatgut und den Variationskoeffizienten für die Ablage von Saatgut und von Dünger berücksichtigen. Der ermittelte Kalibrierwert wird dann entweder über die signalleitende Verbindung 56 an das Steuerungssystem 52 übermittelt oder durch den Bediener manuell an einem Terminal des Steuerungssystems 52 eingegeben. In diesem Fall kann die Anzeige 66 auch zur Darstellung des ermittelten Kalibrierwerts verwendet werden, damit dieser durch den Bediener von der Anzeige 66 abgelesen werden kann.

Das Steuerungssystem 52 ermittelt das Betriebsverhalten, welches der Vereinzelungseinrichtung 26 und der Portioniereinrichtung 14 vorgegeben wird in Abhängigkeit des von dem Prüfgerät 54 berechneten Kalibrierwerts. Alternativ kann der Kalibrierwert auch direkt durch das Steuerungssystem 52 berechnet werden. In diesem Fall werden die durch das Prüfgerät 54 erfassten Ablagepositionen P_{K}, P_{P} der Saatkörner K und Düngerportionen P von dem Prüfgerät 54 an das Steuerungssystem 52 übermittelt.

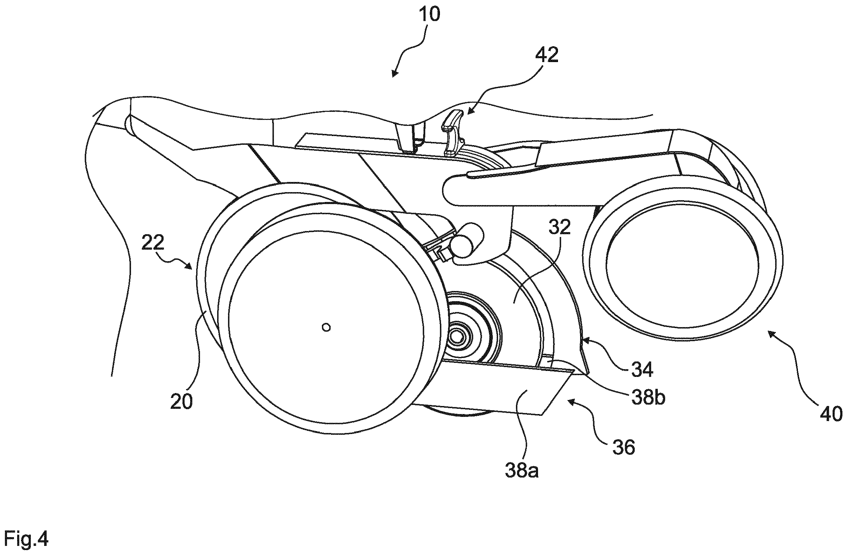

Die Fig. 4 zeigt ein Ausbringaggregat 10, welches im Bereich des Säschars 34 eine Räumeinrichtung 36 aufweist. Die Räumeinrichtung umfasst zwei jeweils seitlich der Schneidscheiben 32 des Säschars 34 angeordnete Räumbleche 38a, 38b, welche dazu dienen, aufgeworfene Erde nach Art eines Schneepflugs von der Säfurche abzutransportieren. Die Räumeinrichtung 36 wird beim Ausführen der Kalibrierfahrt eingesetzt, um eine übermäßige Bedeckung der abgelegten Saatkörner mit Erde zu vermeiden. Ferner weist das Ausbringaggregat 10 eine Verstelleinrichtung 42 auf, mittels welcher ein Furchenschließer 40 von der landwirtschaftlichen Nutzfläche N abgehoben und im abgehobenen Zustand arretiert werden kann. Durch das Abheben des Furchenschließers 40 wird eine aktive Furchenschließung während der Durchführung einer Kalibrierfahrt vermieden.

### Bezugszeichenliste

- 10: Ausbringaggregat
- 12: Halterung
- 14: Portioniereinrichtung
- 16: Portionierelement
- 18: Düngerförderleitung
- 20: Schneidscheibe
- 22: Düngeschar
- 24: Vorratsbehälter
- 26: Vereinzelungseinrichtung
- 28: Vereinzelungselement
- 30: Kornförderleitung
- 32: Schneidscheibe
- 34: Säschar
- 36: Räumeinrichtung
- 38a, 38b: Räumbleche
- 40: Furchenschließer
- 42: Verstelleinrichtung

- 50: Kalibriersystem
- 52: Steuerungssystem
- 54: Prüfgerät
- 56: Verbindung
- 58: Referenzleiste
- 60: Messrad
- 62: Betätigungseinrichtung
- 64a, 64b: Tasten
- 66: Anzeige

- P: Düngerportionen
- P_{P}: Ablagepositionen
- P_{K}: Ablagepositionen
- N: Nutzfläche
- K: Saatkörner
- Δx: Ablagebeziehung
- Δx_{K}: Ablagebeziehung

## Patentansprüche

1. Verfahren zum Abstimmen des Betriebs einer Vereinzelungseinrichtung (26) und des Betriebs einer Portioniereinrichtung (14) einer landwirtschaftlichen Ausbringmaschine aufeinander zur Erzielung einer vorgegebenen örtlichen Ablagebeziehung (Δx) beim Ablegen von mittels der Vereinzelungseinrichtung (26) vereinzelten Saatkörnern (K) und mittels der Portioniereinrichtung (14) erzeugten Düngerportionen (P) auf eine landwirtschaftliche Nutzfläche (N), mit den Schritten:
- Ablegen von vereinzelten Saatkörnern (K) und erzeugten Düngerportionen (P) auf die landwirtschaftliche Nutzfläche (N) mittels der landwirtschaftlichen Ausbringmaschine im Rahmen einer Kalibrierfahrt; und
- Erfassen der Ablagepositionen (P_{K}, P_{P}) der während der Kalibrierfahrt abgelegten Saatkörner (K) und Düngerportionen (P) und/oder deren örtlicher Ablagebeziehung (Δx_{K}) mittels eines mobilen Prüfgeräts (54);
wobei ein mit der Vereinzelungseinrichtung (26) und/oder der Portioniereinrichtung (14) signalleitend verbundenes Steuerungssystem (52) der Vereinzelungseinrichtung (26) und/oder der Portioniereinrichtung (14) zur Erzielung der vorgegebenen örtlichen Ablagebeziehung (Δx) von Saatkörnern (K) und Düngerportionen (P) zumindest temporär ein Betriebsverhalten vorgibt, welches das Steuerungssystem (52) auf Grundlage der mittels des Prüfgeräts (54) erfassten Ablagepositionen (P_{K}, P_{P}) der Saatkörner (K) und Düngerportionen (P) und/oder deren örtlicher Ablagebeziehung (Δx_{K}) ermittelt;
**dadurch gekennzeichnet, dass**
- das mobile Prüfgerät (54) ein elektronisches Messrad (60) und eine Betätigungseinrichtung (62) umfasst, wobei das Messrad (60) von einem Bediener entlang eines Ablagepfads bewegt wird und die Ablagepositionen (P_{K}, P_{P}) der Saatkörner (K) und Düngerportionen (P) und/oder deren örtliche Ablagebeziehung (Δx_{K}) durch manuelle Betätigung der Betätigungseinrichtung (62) erfasst werden; oder
- das mobile Prüfgerät (54) ein elektronisches Bildaufnahmegerät ist, wobei die Ablagepositionen (P_{K}, P_{P}) der während der Kalibrierfahrt abgelegten Saatkörner (K) und Düngerportionen (P) und/oder deren örtliche Ablagebeziehung (Δx_{K}) über eine Auswertung einer oder mehrerer Bildaufnahmen des mobilen Prüfgeräts (54) der während der Kalibrierfahrt abgelegten Saatkörner (K) und Düngerportionen (P) erfasst werden.

2. Verfahren nach Anspruch 1,
**dadurch gekennzeichnet, dass**
- die von der Vereinzelungseinrichtung (26) vereinzelten Saatkörner (K) zu zeitlich voneinander beabstandeten Kornabgabezeitpunkten von der Vereinzelungseinrichtung (26), insbesondere in eine Kornförderleitung, abgegeben werden; und/oder
- die von der Portioniereinrichtung (14) erzeugten Düngerportionen (P) zu zeitlich voneinander beabstandeten Düngerabgabezeitpunkten von der Portioniereinrichtung (14), insbesondere in eine Düngerförderleitung, abgegeben werden;
wobei über das von dem Steuerungssystem (52) vorgegebene Betriebsverhalten vorzugsweise eine Anpassung des Zeitversatzes zwischen den Kornabgabezeitpunkten und den Düngerabgabezeitpunkten veranlasst wird.

3. Verfahren nach Anspruch 1 oder 2,
**dadurch gekennzeichnet, dass** an der landwirtschaftlichen Ausbringmaschine Ablageparameter einstellbar sind, welche die Ablagepositionen (P_{K}, P_{P}) der abgelegten Saatkörner (K) und Düngerportionen (P) und/oder deren örtliche Ablagebeziehung (Δx) beeinflussen, wobei die Ablageparameter während der Kalibrierfahrt und einem nach der Kalibrierfahrt folgenden Ausbringvorgang übereinstimmen.

4. Verfahren nach Anspruch 1 oder 2,
**dadurch gekennzeichnet, dass** an der landwirtschaftlichen Ausbringmaschine Ablageparameter einstellbar sind, welche die Ablagepositionen (P_{K}, P_{P}) der abgelegten Saatkörner (K) und Düngerportionen (P) und/oder deren örtliche Ablagebeziehung (Δx) beeinflussen, wobei zumindest ein Ablageparameter, insbesondere die Fahrgeschwindigkeit, während der Kalibrierfahrt und einem nach der Kalibrierfahrt folgenden Ausbringvorgang voneinander abweichen.

5. Verfahren nach Anspruch 1 oder 2,
**dadurch gekennzeichnet, dass** an der landwirtschaftlichen Ausbringmaschine Ablageparameter einstellbar sind, welche die Ablagepositionen (P_{K}, P_{P}) der abgelegten Saatkörner (K) und Düngerportionen (P) und/oder deren örtliche Ablagebeziehung (Δx) beeinflussen, wobei zumindest ein Ablageparameter während der Kalibrierfahrt verändert wird.

6. Verfahren nach einem der vorstehenden Ansprüche,
**dadurch gekennzeichnet, dass** das Steuerungssystem (52) das Betriebsverhalten, welches der Vereinzelungseinrichtung (26) und/oder der Portioniereinrichtung (14) zumindest temporär vorgegeben wird, in Abhängigkeit zumindest eines Kalibrierwerts ermittelt, wobei der zumindest eine Kalibrierwert von dem Steuerungssystem (52) und/oder dem Prüfgerät (54) aus den mittels des Prüfgeräts (54) erfassten Ablagepositionen (P_{K}, P_{P}) der Saatkörner (K) und Düngerportionen (P) und/oder deren örtlicher Ablagebeziehung (Δx_{K}) ermittelt wird.

7. Verfahren nach einem der vorstehenden Ansprüche,
**dadurch gekennzeichnet, dass** die Ablagepositionen (P_{K}, P_{P}) der während der Kalibrierfahrt abgelegten Saatkörner (K) und Düngerportionen (P), deren örtliche Ablagebeziehung (Δx_{K}) und/oder ein daraus ermittelter Kalibrierwert von dem mobilen Prüfgerät (54) per Datenübertragung an das Steuerungssystem (52) übermittelt werden.

8. Verfahren nach einem der vorstehenden Ansprüche,
**dadurch gekennzeichnet, dass** die vereinzelten Saatkörner (K) während der Kalibrierfahrt über eine Kornablageeinrichtung der landwirtschaftlichen Ausbringmaschine auf die landwirtschaftliche Nutzfläche (N) abgelegt werden, wobei die Kornablageeinrichtung in eine Ausbringkonfiguration, in welcher eine Bedeckung der abgelegten Saatkörner (K) mit Erde erfolgt, und in eine Kalibrierfahrtkonfiguration, in welcher zumindest annährend keine Bedeckung der abgelegten Saatkörner (K) mit Erde erfolgt, verbringbar ist, wobei sich die Kornablageeinrichtung während der Kalibrierfahrt in der Kalibrierfahrtkonfiguration befindet.

9. Verfahren nach einem der vorstehenden Ansprüche,
**dadurch gekennzeichnet, dass** die erzeugten Düngerportionen (P) während der Kalibrierfahrt über eine Düngerablageeinrichtung der landwirtschaftlichen Ausbringmaschine auf die landwirtschaftliche Nutzfläche (N) abgelegt werden, wobei die Düngerablageeinrichtung in eine Ausbringkonfiguration, in welcher eine Bedeckung der abgelegten Düngerportionen (P) mit Erde erfolgt, und in eine Kalibrierfahrtkonfiguration, in welcher eine reduzierte Bedeckung der abgelegten Düngerportionen (P) mit Erde erfolgt, verbringbar ist, wobei sich die Düngerablageeinrichtung während der Kalibrierfahrt in der Kalibrierfahrtkonfiguration befindet.

10. Kalibriersystem (50) für eine landwirtschaftliche Ausbringmaschine zur Erzielung einer vorgegebenen örtlichen Ablagebeziehung (Δx) beim Ablegen von vereinzelten Saatkörner (K) und erzeugten Düngerportionen (P) auf eine landwirtschaftliche Nutzfläche (N), mit
- einer Vereinzelungseinrichtung (26) zum Vereinzeln von Saatkörnern (K);
- einer Portioniereinrichtung (14) zum Erzeugen von Düngerportionen (P);
- einem mobilen Prüfgerät (54), mittels welchem die Ablagepositionen (P_{K}, P_{P}) von während einer Kalibrierfahrt abgelegten Saatkörnern (K) und Düngerportionen (P) und/oder deren örtliche Ablagebeziehung (Δx_{K}) erfassbar sind; und
- einem Steuerungssystem (52), welches mit der Vereinzelungseinrichtung (26) und/oder der Portioniereinrichtung (14) signalleitend verbunden und dazu eingerichtet ist, den Betrieb der Vereinzelungseinrichtung (26) und den Betrieb der Portioniereinrichtung (14) aufeinander abzustimmen, wobei das Steuerungssystem (52) zur Erzielung der vorgegebenen örtlichen Ablagebeziehung (Δx) dazu eingerichtet ist, der Vereinzelungseinrichtung (26) und/oder der Portioniereinrichtung (14) zumindest temporär ein Betriebsverhalten vorzugeben, welches das Steuerungssystem (52) auf Grundlage der mittels des Prüfgeräts (54) erfassten Ablagepositionen (P_{K}, P_{P}) der Saatkörner (K) und Düngerportionen (P) und/oder deren örtlicher Ablagebeziehung (Δx_{K}) ermittelt;
**dadurch gekennzeichnet, dass**
- das mobile Prüfgerät (54) ein elektronisches Messrad (60) und eine Betätigungseinrichtung (62) umfasst, wobei das Messrad (60) von einem Bediener entlang eines Ablagepfads bewegbar ist und die Ablagepositionen (P_{K}, P_{P}) der Saatkörner (K) und Düngerportionen (P) und/oder deren örtliche Ablagebeziehung (Δx_{K}) durch manuelle Betätigung der Betätigungseinrichtung (62) erfassbar sind; oder
- das mobile Prüfgerät (54) ein elektronisches Bildaufnahmegerät ist, wobei die Ablagepositionen (P_{K}, P_{P}) der während der Kalibrierfahrt abgelegten Saatkörner (K) und Düngerportionen (P) und/oder deren örtliche Ablagebeziehung (Δx_{K}) über eine Auswertung einer oder mehrerer Bildaufnahmen des mobilen Prüfgeräts (54) der während der Kalibrierfahrt abgelegten Saatkörner (K) und Düngerportionen (P) erfassbar sind.

## Claims

1. A method of coordinating the operation of a singling device (26) and the operation of a portioning device (14) of an agricultural application machine with each other to achieve a preset local placement relationship (Δx) when depositing seed grains (K) singulated by the singling device (26) and fertilizer portions (P) produced by the portioning device (14) onto an agricultural area (N), comprising the steps of:
- depositing singled seed grains (K) and produced fertilizer portions (P) onto the agricultural area (N) by means of the agricultural application machine in the course of a calibration travel; and
- detecting the placement positions (P_{K}, P_{P}) of the seed grains (K) and fertilizer portions (P) deposited during the calibration travel and/or their local placement relationship (Δx_{K}) by means of a mobile testing device (54);
wherein a control system (52), which is connected to the singling device (26) and/or the portioning device (14) in a signal-conducting manner, imposes an operating behaviour on the singling device (26) and/or the portioning device (14) at least temporarily in order to achieve the preset local placement relationship (Δx) of seed grains (K) and fertilizer portions (P), which the control system (52) determines on the basis of the placement positions (P_{K}, P_{P}) of the seed grains (K) and fertilizer portions (P) detected by means of the mobile testing device (54) and/or their local placement relationship (Δx_{K});
**characterized in that**
- the mobile testing device (54) comprises an electronic measuring wheel (60) and an actuating device (62), wherein the measuring wheel (60) is moved by an operator along a placement path and the placement positions (P_{K}, P_{P}) of the seed grains (K) and fertilizer portions (P) and/or their local placement relationship (Δx_{K}) are detected by manual actuation of the actuating device (62); or
- the mobile testing device (54) is an electronic image recording device, wherein the placement positions (P_{K}, P_{P}) of the seed grains (K) and fertilizer portions (P) placed during the calibration travel and/or their local placement relationship (Δx_{K}) are recorded via an evaluation of one or more image recordings of the mobile testing device (54) of the seed grains (K) and fertilizer portions (P) placed during the calibration travel.

2. Method according to claim 1,
**characterized in that**
- the seed grains (K) singled by the singling device (26) are discharged from the singling device (26), in particular into a grain conveying line, at grain discharge times spaced apart from one another in time; and/or
- the fertilizer portions (P) produced by the portioning device (14) are discharged from the portioning device (14), in particular into a fertilizer conveying line, at fertilizer discharge times spaced apart from one another in time;
wherein an adjustment of the time offset between the grain delivery times and the fertilizer delivery times is preferably initiated via the operating behavior imposed by the control system (52).

3. Method according to claim 1 or 2,
**characterized in that** placement parameters can be set on the agricultural application machine which influence the placement positions (P_{K}, P_{P}) of the placed seed grains (K) and fertilizer portions (P) and/or their local placement relationship (Δx), wherein the placement parameters correspond during the calibration travel and a placement operation following after the calibration travel.

4. Method according to claim 1 or 2,
**characterized in that** placement parameters can be set on the agricultural spreading machine which influence the placement positions (P_{K}, P_{P}) of the placed seed grains (K) and fertilizer portions (P) and/or their local placement relationship (Δx), at least one placement parameter, in particular the travel speed, differing from one another during the calibration travel and a spreading operation following the calibration travel.

5. Method according to claim 1 or 2,
**characterized in that** placement parameters can be set on the agricultural application machine which influence the placement positions (P_{K}, P_{P}) of the placed seed grains (K) and fertilizer portions (P) and/or their local placement relationship (Δx), at least one placement parameter being changed during the calibration travel.

6. Method according to one of the preceding claims,
**characterized in that** the control system (52) determines the operating behavior, which is imposed at least temporarily on the singling device (26) and/or the portioning device (14), as a function of at least one calibration value, the at least one calibration value being determined by the control system (52) and/or the mobile testing device (54) from the placement positions (P_{K}, P_{P}) of the seed grains (K) and fertilizer portions (P) detected by means of the mobile testing device (54) and/or their local placement relationship (Δx_{K}).

7. Method according to one of the preceding claims,
**characterized in that** the placement positions (P_{K}, P_{P}) of the seed grains (K) and fertilizer portions (P) placed during the calibration travel, their local placement relationship (Δx_{K}) and/or a calibration value determined therefrom are transmitted by the mobile testing device (54) by data transmission to the control system (52).

8. Method according to one of the preceding claims,
**characterized in that** the separated seed grains (K) are deposited on the agricultural area (N) during the calibration travel via a grain depositing device of the agricultural application machine, wherein the grain depositing device is switched into an application configuration in which the deposited seed grains (K) are covered with soil and into a calibration travel configuration in which the deposited seed grains (K) are at least approximately not covered with soil, in which the deposited seed grains (K) are covered with soil, and in a calibration travel configuration in which the deposited seed grains (K) are at least approximately not covered with soil, wherein the grain depositing device is located in the calibration travel configuration during the calibration travel.

9. Method according to one of the preceding claims,
**characterized in that** the produced fertilizer portions (P) are deposited on the agricultural area (N) during the calibration travel via a fertilizer depositing device of the agricultural application machine, wherein the fertilizer depositing device is switched to a spreading configuration in which the deposited fertilizer portions (P) are covered with soil and to a calibration travel configuration in which the deposited fertilizer portions (P) are covered with soil, in which the deposited fertilizer portions (P) are covered with soil, and in a calibration travel configuration in which the deposited fertilizer portions (P) are covered with soil to a reduced extent, the fertilizer depositing device being located in the calibration travel configuration during the calibration travel.

10. A calibration system (50) for an agricultural application machine for achieving a preset local placement relationship (Δx) in depositing singulated seed grains (K) and produced fertilizer portions (P) on an agricultural area (N), comprising
- a singling device (26) for singling seed grains (K);
- a portioning device (14) for producing fertilizer portions (P);
- a mobile testing device (54), by means of which the placement positions (P_{K}, P_{P}) of seed grains (K) and fertilizer portions (P) deposited during a calibration run and/or their local placement relationship (Δx_{K}) can be detected; and
- a control system (52) which is connected in a signal-conducting manner to the singling device (26) and/or the portioning device (14) and is set up to coordinate the operation of the singling device (26) and the operation of the portioning device (14) with one another, the control system (52) being set up to achieve the preset local placement relationship (Δx) to impose, at least temporarily, an operating behavior on the singling device (26) and/or the portioning device (14), which operating behavior is determined by the control system (52) on the basis of the placement positions (P_{K}, P_{P}) of the seed grains (K) and fertilizer portions (P) detected by means of the mobile testing device (54) and/or their local placement relationship (Δx_{K}) ;
**characterized in that**
- the mobile testing device (54) comprises an electronic measuring wheel (60) and an actuating device (62), the measuring wheel (60) being movable by an operator along a placement path and the placement positions (P_{K}, P_{P}) of the seed grains (K) and fertilizer portions (P) and/or their local placement relationship (Δx_{K}) being detectable by manual actuation of the actuating device (62); or
- the mobile testing device (54) is an electronic image recording device, wherein the placement positions (P_{K}, P_{P}) of the seed grains (K) and fertilizer portions (P) placed during the calibration travel and/or their local placement relationship (Δx_{K}) can be detected via an evaluation of one or more image recordings of the mobile testing device (54) of the seed grains (K) and fertilizer portions (P) placed during the calibration travel.

## Revendications

1. Procédé pour adapter l'un à l'autre le fonctionnement d'un dispositif d'individualisation (26) et le fonctionnement d'un dispositif de portionnement (14) d'une machine d'épandage agricole pour obtenir un rapport de dépose locale prédéterminé (Δx) lors de la dépose de graines de semence (K) séparées au moyen du dispositif d'individualisation (26) et de portions d'engrais (P) générées au moyen du dispositif de portionnement (14) sur une surface agricole utile (N), comprenant les étapes :
- dépose de graines de semence (K) séparées et de portions d'engrais (P) générées sur la surface agricole utile (N) au moyen de ladite machine d'épandage agricole dans le cadre d'un trajet de calibrage ; et
- saisie des positions de dépose (P_{K}, P_{P}) des graines de semence (K) et portions d'engrais (P) déposées pendant le trajet de calibrage, et/ou de leur rapport de dépose locale (Δx_{K}) au moyen d'un appareil de contrôle mobile (54) ;
un système de commande (52) relié au dispositif d'individualisation (26) et/ou au dispositif de portionnement (14) par conduction de signaux, prescrivant au dispositif d'individualisation (26) et/ou au dispositif de portionnement (14) , pour obtenir ledit rapport de dépose locale (Δx) prédéfini de graines de semence (K) et de portions d'engrais (P), au moins temporairement un comportement de fonctionnement que le système de commande (52) détermine sur la base des positions de dépose (P_{K}, P_{P}) des graines de semence (K) et des portions d'engrais (P) détectées au moyen de l'appareil de contrôle (54) et/ou de leur rapport de dépose locale (Δx_{K}) ;
**caractérisé en ce que**
- l'appareil de contrôle mobile (54) comprend une roue de mesure électronique (60) et un dispositif actionneur (62), ladite roue de mesure (60) étant déplacée par un opérateur le long d'un chemin de dépose, et les positions de dépose (P_{K}, P_{P}) des graines de semence (K) et des portions d'engrais (P) et/ou leur rapport de dépose locale (Δx_{K}) étant détectés par actionnement manuel du dispositif actionneur (62) ; ou
- l'appareil de contrôle mobile (54) est un appareil électronique de prise de vues, les positions de dépose (P_{K}, P_{P}) des graines de semence (K) et des portions d'engrais (P) déposées pendant le trajet de calibrage et/ou leur rapport de dépose locale (Δx_{K}) étant détectés par l'intermédiaire d'une analyse d'une ou de plusieurs images, prises par l'appareil de contrôle mobile (54), des graines de semence (K) et portions d'engrais (P) déposées pendant le trajet de calibrage.

2. Procédé selon la revendication 1,
**caractérisé en ce que**
- les graines de semence (K) séparées par le dispositif d'individualisation (26) sont délivrées par le dispositif d'individualisation (26), notamment dans un conduit de transport de graines, à des intervalles temporels de délivrance de graines ; et/ou
- les portions d'engrais (P) générées par le dispositif de portionnement (14) sont délivrées par le dispositif de portionnement (14), notamment dans un conduit de transport d'engrais, à des intervalles temporels de délivrance d'engrais ;
dans lequel, par l'intermédiaire du comportement de fonctionnement prédéfini par le système de commande (52), on provoque de préférence une adaptation du décalage temporel entre les moments de délivrance des graines et les moments de délivrance d'engrais.

3. Procédé selon la revendication 1 ou 2,
**caractérisé en ce que** des paramètres de dépose peuvent être réglés sur la machine d'épandage agricole, lesquels paramètres ont une influence sur les positions de dépose (P_{K}, P_{P}) des graines de semence (K) et portions d'engrais (P) déposées et/ou leur rapport de dépose locale (Δx), les paramètres de dépose coïncidant pendant le trajet de calibrage et un processus d'épandage survenant après le trajet de calibrage.

4. Procédé selon la revendication 1 ou 2,
**caractérisé en ce que** des paramètres de dépose peuvent être réglés sur la machine d'épandage agricole, lesquels paramètres ont une influence sur les positions de dépose (P_{K}, P_{P}) des graines de semence (K) et portions d'engrais (P) déposées et/ou leur rapport de dépose locale (Δx), au moins un paramètre de dépose, notamment la vitesse de marche, différant l'un de l'autre pendant le trajet de calibrage et un processus d'épandage survenant après le trajet de calibrage.

5. Procédé selon la revendication 1 ou 2,
**caractérisé en ce que** des paramètres de dépose peuvent être réglés sur la machine d'épandage agricole, lesquels paramètres ont une influence sur les positions de dépose (P_{K}, P_{P}) des graines de semence (K) et portions d'engrais (P) déposées et/ou leur rapport de dépose locale (Δx), au moins un paramètre de dépose étant modifié pendant le trajet de calibrage.

6. Procédé selon l'une quelconque des revendications précédentes,
**caractérisé en ce que** le système de commande (52) détermine le comportement de fonctionnement, qui est prescrit au moins temporairement au dispositif d'individualisation (26) et/ou au dispositif de portionnement (14), en fonction d'au moins une valeur de calibrage, ladite au moins une valeur de calibrage étant déterminée par le système de commande (52) et/ou l'appareil de contrôle (54) à partir des positions de dépose (P_{K}, P_{P}), détectées au moyen de l'appareil de contrôle (54), des graines de semence (K) et portions d'engrais (P) et/ou leur rapport de dépose locale (Δx_{K}).

7. Procédé selon l'une quelconque des revendications précédentes,
**caractérisé en ce que** les positions de dépose (P_{K}, P_{P}) des graines de semence (K) et portions d'engrais (P) déposées pendant le trajet de calibrage, leur rapport de dépose locale (Δx_{K}) et/ou une valeur de calibrage déterminée sur cette base sont transmises par l'appareil de contrôle mobile (54) au système de commande (52) par voie de transmission de données.

8. Procédé selon l'une quelconque des revendications précédentes,
**caractérisé en ce que** les graines de semence (K) séparées sont déposées pendant le trajet de calibrage sur la surface agricole utile (N) par le biais d'un dispositif de dépose de graines de la machine d'épandage agricole, ledit dispositif de dépose de graines pouvant être mis dans une configuration d'épandage dans laquelle les graines de semence (K) déposées sont recouvertes de terre, et dans une configuration de calibrage dans laquelle les graines de semence (K) ne sont au moins approximativement pas recouvertes de terre, le dispositif de dépose de graines se trouvant dans la configuration de trajet de calibrage pendant le trajet de calibrage.

9. Procédé selon l'une quelconque des revendications précédentes,
**caractérisé en ce que** les portions d'engrais (P) générées sont déposées pendant le trajet de calibrage sur la surface agricole utile (N) par le biais d'un dispositif de dépose d'engrais de la machine d'épandage agricole, ledit dispositif de dépose d'engrais pouvant être mis dans une configuration d'épandage dans laquelle les portions d'engrais (P) déposées sont recouvertes de terre, et dans une configuration de calibrage dans laquelle les portions d'engrais (P) sont recouvertes de terre de manière réduite, le dispositif de dépose d'engrais se trouvant dans la configuration de trajet de calibrage pendant le trajet de calibrage.

10. Système de calibrage (50) pour une machine d'épandage agricole, destiné à obtenir un rapport de dépose locale (Δx) prédéfini lors de la dépose de graines de semence (K) séparées et de portions d'engrais (P) générées sur la surface agricole utile (N), comprenant
- un dispositif d'individualisation (26) pour individualiser des graines de semence (K) ;
- un dispositif de portionnement (14) pour générer des portions d'engrais (P) ;
- un appareil de contrôle mobile (54), au moyen duquel les positions de dépose (P_{K}, P_{P}) de graines de semence (K) et portions d'engrais (P) déposées pendant un trajet de calibrage et/ou leur rapport de dépose locale (Δx_{K}) peuvent être détectées ; et
- un système de commande (52) qui est relié au dispositif d'individualisation (26) et/ou au dispositif de portionnement (14) par conduction de signaux et qui est destiné à adapter le fonctionnement du dispositif d'individualisation (26) et le fonctionnement du dispositif de portionnement (14) l'un à l'autre, le système de commande (52) étant, pour obtenir le rapport de dépose locale (Δx) prédéfini, destiné à prescrire au dispositif d'individualisation (26) et/ou au dispositif de portionnement (14), au moins temporairement un comportement de fonctionnement que le système de commande (52) détermine sur la base des positions de dépose (P_{K}, P_{P}) des graines de semence (K) et des portions d'engrais (P) détectées au moyen de l'appareil de contrôle (54) et/ou de leur rapport de dépose locale (Δx_{K}) ;
**caractérisé en ce que**
- l'appareil de contrôle mobile (54) comprend une roue de mesure électronique (60) et un dispositif actionneur (62), ladite roue de mesure (60) étant déplacée par un opérateur le long d'un chemin de dépose et les positions de dépose (P_{K}, P_{P}) des graines de semence (K) et des portions d'engrais (P) et/ou leur rapport de dépose locale (Δx_{K}) étant détectés par actionnement manuel du dispositif actionneur (62) ; ou
- l'appareil de contrôle mobile (54) est un appareil électronique de prise de vues, les positions de dépose (P_{K}, P_{P}) des graines de semence (K) et des portions d'engrais (P) déposées pendant le trajet de calibrage et/ou leur rapport de dépose locale (Δx_{K}) pouvant être détectées par l'intermédiaire d'une analyse d'une ou de plusieurs images, prises par l'appareil de contrôle mobile (54), des graines de semence (K) et portions d'engrais (P) déposées pendant le trajet de calibrage.
